# EUROPEAN PATENT APPLICATION

(11) **EP 4 542 523 A1**
(43) Date of publication of application: **23.04.2025**
(21) Application number: 23204686.2
(22) Date of filing: 19.10.2023
(51) Int. Cl.: G08G 1/0967, B60W 30/182

(54) **METHOD AND DEVICE FOR ADJUSTING A DRIVING MODE OF A MOTOR VEHICLE**

(71) Applicant: CARIAD SE, 38440 Wolfsburg (DE)
(72) Inventor: Patil, Uday, 44892 Bochum (DE); Matheswaran, Arul Iyappan, 44623 Herne (DE); Panitini, Madhu Satyanarayana, 44799 Bochum (DE); Strohmenger, Klaus, 59368 Werne (DE); Wuench, Christian, 45130 Essen (DE); Wienhoefer, Magnus, 45699 Herten (DE)
(74) Representative: Hofstetter, Schurack & Partner

(57) **Abstract**

The present invention relates to a method and device for adjusting a driving mode of a motor vehicle (100), the method comprising determining a position of a motor vehicle (100), receiving, from a remote computing unit (120), environment information based on the location of the motor vehicle (100), wherein the environment information (110, 111, 112, 113) originates from a vehicle (101) different from the motor vehicle (100), and adjusting a driving mode of the motor vehicle (100) based on the environment information.

## Description

The present invention relates to a method and device for adjusting a driving mode of a motor vehicle as well as a motor vehicle comprising such a device.

Modern vehicle may have one or more cameras to pre-sense environmental conditions around the vehicle. However, there are certain limitations to this technology.

It is thus an object of the present invention to provide an improved method and device for adjusting a driving mode of a motor vehicle.

According to a first aspect, a method for adjusting a driving mode of a motor vehicle is provided.

Therein, the method comprises determining a position of a motor vehicle, receiving, from a remote computing unit, environment information based on the location of the motor vehicle, wherein the environment information originates from a vehicle different from the motor vehicle, and adjusting a driving mode of the motor vehicle based on the environment information.

The method is particularly suitable to adjust a driving mode of a motor vehicle by predicting environmental conditions in the surroundings of the motor vehicle.

According to the method, in a first step, a position of a motor vehicle is determined.

The position, which may be also identified as a location may comprise a current position, in particular an address, a city, a neighborhood, a proximity to a certain poi, point of interest, an orientation, one or more coordinates and/or a driving direction of the vehicle. In particular, the position may also comprise information regarding a planned, current or scheduled route that the vehicle is navigated along.

The position may be determined by using a position sensor, such as a GPS and/or GNSS sensor, an, optionally, by using corresponding map data.

In a further step, environment information is received from a remote computing unit based on the location of the motor vehicle.

A remote computing unit may be defined as one or more servers, a data center or backend, for example provided by a car manufacturer, a fleet operator or a public or private entity operating the remote computing unit.

The remote computing unit is spaced apart from the vehicle and different therefrom.

The environment information may be received through a communication channel, in particular a wireless communication channel, such as a mobile communications channel, in particular 3G, 4G or 5G, Bluetooth, WiFi and/or Car2X, in particular Car2Car or Car2lnfrastructure.

The environment information may in particular be received in response to a request, a query or a provision of the vehicle to the remote computing unit, for example including the position of the vehicle, which may be transferred via the same or similar communication channels, and, optionally, further information, as will be explained in the following.

The environment information may comprise information such as insight, data and/or conditions of the environment of the motor vehicle, in particular of the outside surrounding the motor vehicle.

The environment information may in particular relate to a certain area or radius around the motor vehicle and may further be based on a driving direction of the vehicle and/or a planned, current or scheduled route, which may be provided to the remote computing unit by the present motor vehicle.

In addition, the environment information may relate to a certain type of motor vehicle, for example to a certain brand, make, model, size, dimension, in particular height, length, width, or weight of the motor vehicle, which may also be provided to the remote computing unit by the present motor vehicle.

Further, the environment information may also relate to a certain time of day or date at the current time, which may also be provided to the remote computing unit by the present motor vehicle or collected at the computing unit.

Therein, the environment information received from the remote computing unit originates from a vehicle different from the motor vehicle.

In particular, the environment information has been collected or gathered previously by a vehicle different from the present motor vehicle at the same or a similar location or position and then provided to the remote computing unit, for example by the same or similar communication channels as explained with respect to the motor vehicle.

Therein, the environment information may be collected by using one or more sensor on board of the other vehicle, such as one or more cameras, radars, lidars, and in particular shock, vibration, acceleration and/or impulse sensors, as will be explained in greater detail below.

In particular the sensors of the other vehicle may be different than one or more sensors on board of the present motor vehicle. For example, the sensors on the other vehicle may be better, in particular be more sensible, be able to collect a wider range of data or just be sensors that are not employed on the present motor vehicle.

In other words, the environment information may particularly comprise information or data relating to individual aspects in the environment of the motor vehicle that the motor vehicle itself cannot identify or gather on its own.

However, the other vehicle that provided the environment information may be particularly similar to the present motor vehicle, as it may be of the same brand, make, model, size, dimension, in particular height, length, width, or weight of the motor vehicle.

In addition, the other vehicle may have collected the environment information at a same or similar time as the motor vehicle.

In particular, there may be no communication or transmittal of environment information from car to car, in particular not from another vehicle to the motor vehicle but only through a remote computing unit, where the data is gathered.

In a further step, a driving mode of the motor vehicle is adjusted based on the environment information.

A driving mode of the motor vehicle is a setup or an adjustment of one or more components of the motor vehicle, such as, suspension, transmission, steering, throttle and/or brakes of the motor vehicle.

Typically, a certain driving mode is preset or preadjusted in the motor vehicle. Examples of one or more driving modes are a comfort mode, wherein suspension settings are set to soft and throttle, brakes and transmission settings are set to smooth, a sport mode, wherein suspension settings are set to hard, brakes and transmission settings are set to low and throttle settings are set to maximum performance, an eco mode, wherein suspension settings are set to hard, transmission settings are set to low rpm and throttle settings are set to low performance, and an off-road mode, wherein suspension settings are set to high, throttle settings are set to low performance and transmission settings are set to low gear.

This previously set driving mode and in particular one or more individual settings are adjusted in response to the received environment information.

In particular, in response to receiving the environment information, a driving mode is changed from sport to off-road or from sport to eco.

Through the invention, it is possible to dynamically adjust to environmental changes and in particular such changes that cannot be anticipated by the driver or the motor vehicle alone but rather with the help of at least one more other vehicle.

According to an embodiment, the environment information comprises road condition information.

A road condition information may comprise information or data relating to the road composition and in particular its surface in the environment of the motor vehicle. For example, a road condition information may relate to a certain slippery condition, a certain roughness, in particular the presence of bumps and/or potholes, a certain curvature, in particular a curve radius, the presence of water, in particular heavy water due to flooding, or the like.

The road condition information may in particular be determined and/or observed by the other vehicle, for example by using one or more sensors, such as a one or more cameras, radars, lidars, and in particular shock, vibration, acceleration and/or impulse sensors, and transmitted to the remote computing unit to be processed and then provided to the present motor vehicle.

Through this embodiment, it is possible to consider road condition information when adjusting the driving mode. For example, considering that a certain roughness or bumpiness is present in the road ahead, a driving mode can be switched from sport to off-road.

According to an embodiment, the environment information comprises road type information.

A road type information may comprise information or data relating to the circumstances or the facts of the road in the environment of the motor vehicle, such as a number and/or width of lanes, the presence of an emergency stop or lane, the presence of traffic lights, a maximum speed limit, whether it is a highway, a motorway a country road or a city road, or the like.

The road type information may in particular be determined and/or observed by the other vehicle, for example by using one or more sensors, such as a one or more cameras, radars and/or lidars, and transmitted to the remote computing unit to be processed and then provided to the present motor vehicle. Additionally, or alternatively, data may be gathered by the remote computing unit from a third-party source, different from the other vehicle, such as, a map server, or the like.

Through this embodiment, it is possible to consider road type information when adjusting the driving mode. For example, considering that a motorway is soon to be reached on the route ahead, a driving mode can be switched from comfort to sport mode.

According to an embodiment, the environment information comprises situational information.

A situational information may comprise information or data relating to a certain situation, in particular a temporary situation, in the environment of the motor vehicle, such as, traffic, in particular a congestion or a traffic jam, an accident, an emergency, a construction site, in particular, a road or lane closing due to construction, or the like.

The situational information may in particular be determined and/or observed by the other vehicle, for example by using one or more sensors, such as a one or more cameras, radars and/or lidars, and transmitted to the remote computing unit to be processed and then provided to the present motor vehicle. Additionally, or alternatively, data may be gathered by the remote computing unit from a third-party source, different from the other vehicle, such as, a traffic server, or the like.

Through this embodiment, it is possible to consider situational information when adjusting the driving mode. For example, considering that an accident is present on the road ahead, a driving mode can be switched from sport to comfort.

According to an embodiment, the environment information comprises weather information

A weather information may comprise information or data relating to a whether condition or situation, in particular at the current time, in the environment of the motor vehicle, such as, snow, rain, ice or hail, a light situation, in particular visibility, cloudiness, the presence of haze or fog, a temperature, humidity and/or a sun radiation.

The weather information may in particular be determined and/or observed by the other vehicle, for example by using one or more sensors, such as a one or more cameras, radars and/or lidars, and transmitted to the remote computing unit to be processed and then provided to the present motor vehicle. Additionally, or alternatively, data may be gathered by the remote computing unit from a third-party source, different from the other vehicle, such as, a weather server, or the like.

Through this embodiment, it is possible to consider weather information when adjusting the driving mode. For example, considering that snow level is present on the road ahead, a driving mode can be switched from comfort to off-road.

According to an embodiment, the environment information is younger than a predetermined age.

An age presently relates to the date and time when the information or the data relating to the environment information has been gathered. In particular, the age may be determined in hours, days, months or years from the present point in time.

For example, the environment information may only be considered if it is not older than one year, one months, three days, two days, one day, 12 hours, 6 hours, 3 hours, 1 hour or 30 mins.

In contrast, environment information that is older that the predetermined age may not be considered, discarded or in particular be rated less confident.

In particular, a driving mode of the motor vehicle may be adjusted in addition based on the age of the environment information. For example, an environment information being three days old indicates a broken-down car on the motorway ahead. Due to the age, this information is not considered, and a driving mode is not changed.

Through this embodiment, the data upon which the driving mode adjustment is carried out is particular up to date and thus very precise.

According to an embodiment, the environment information originates from multiple vehicles different from the motor vehicle.

In particular, the environment information comprises averaged environment information collected from multiple vehicles different from the motor vehicle.

Typically, environment information is gathered by many other vehicle, for example 100, 1000 or 10000 other vehicles, different from the present motor vehicle. In particular, all vehicles of a certain make or fleet continuously collect environment information and transmit it to the remote computing unit, wherein the data may be averaged.

In particular, the data from the multiple vehicles is rated by a confidence score, in particular based on the age, in particular the average age, of the data and/or the diversity of the data. Therein, a driving mode of the motor vehicle may be adjusted in addition based on the confidence score of the environment information.

Further, the data from the multiple vehicles may be analyzed by an artificial intelligence, such as, for example, by using machine learning tools. Therein, a driving mode of the motor vehicle may be adjusted in addition based on the analysis from the artificial intelligence.

Through this embodiment, a particularly precise adjustment of a driving mode is achieved.

According to an embodiment, the method further comprises determining a characteristic in the environment of the motor vehicle and comparing the characteristic with a characteristic in the environment information, wherein adjusting a driving mode of the motor vehicle is additionally based on the comparison.

For example, a sensor, such as a camera, a radar or a lidar of the present motor vehicle gathers information from the environment of the motor vehicle. Therein, a particular characteristic is detected, such as an indication of an upcoming construction site. This particular characteristic is then compared with a characteristic in the environment information. In particular, it is checked, whether this particular characteristic is present in the environment information. Thus, it is possible to verify the accuracy of the environment information live, during driving.

Therein, a driving mode of the motor vehicle may be adjusted in addition based on the comparison of the determined characteristic with a characteristic in the environment information.

For example, the environment information indicates that there is a traffic jam ahead on the road, in particular due to a construction site. Therein, the sign indicating the construction site is captured by the on-board camera of the motor vehicle and compared to the environment information, which indicates the same information. Then, the driving mode may be adjusted from a sport mode to a comfort mode. On the other hand, if this particular sign and no other signs indicating a construction site are not recognized by the camera of the motor vehicle a different driving mode adjustment may be carried out or no adjustment may be carried out at all.

Through this embodiment, a live verification of the environment information is possible and thus a particularly precise adjustment of a driving mode is achieved.

According to an embodiment, the method further comprises receiving a user input regarding a driving mode of the motor vehicle, wherein adjusting a driving mode of the motor vehicle based on the environment information is performed in response to the user input.

In particular, a user, such as a driver, may indicate his preferred driving mode, for example by selecting one of several options on a touch screen display, such as, an infotainment system, or through one or more buttons.

Therein, this user preference is considered when adjusting the driving mode. For example, the user has opted for a sport mode and thus, even when the environment information indicates a construction site, the sport mode is maintained. As another example, the user may have selected eco mode and thus, although a motorway with no speed limit is detected in the environment information the driving mode is not switched to sport mode but is rather maintained in eco mode.

According to an embodiment, the method further comprises presenting a recommendation regarding a driving mode of the motor vehicle based on the environment information, wherein receiving a user input is received in response to the presentation of the recommendation.

In particular, before adjusting the driving mode, the user may be presented with an indication to switch driving modes and in particular with a choice of two or more driving modes, for example on the touch screen display. Therein, further information, such as the reason for the proposed change of driving modes and the quality of the environment information, such as age and/or diversity of the data, may be presented together with the recommendation and/or the selection option.

Therein, a user may just confirm the recommendation, for example by a touch input on the touch screen display or a button press. On the other hand, if the user does not agree with the recommendation, he can also decline or reject it. In particular, the user may select and/or reconfirm one of many alternatives presented or even select an option that is not recommended.

Through this embodiment, a particular interactive selection and consideration of a user's preference is possible.

For applications or situations which may arise during execution of the method, and which are not explicitly described here, it may be provided that, in accordance with the method, an error message and/or a prompt for user feedback is output and/or a default setting and/or a predetermined initial state is set.

According to another aspect a device for adjusting a driving mode of a motor vehicle is provided. The device may comprise a data processing unit adapted to perform an embodiment of the method according to the invention.

For this purpose, the data processing unit may comprise at least one microprocessor and/or at least one microcontroller and/or at least one FPGA (field programmable gate array) and/or at least one DSP (digital signal processor). In particular, a CPU (Central Processing Unit), a GPU (Graphical Processing Unit) or an NPU (Neural Processing Unit) can be used as the microprocessor in each case. Furthermore, the data processing unit may have program code which is arranged to perform the embodiment of the method according to the invention when executed by the data processing unit. The program code may be stored in a data memory unit of the data processing unit. The data processing unit may be based, for example, on at least one circuit board and/or on at least one SoC (system on chip).

According to a further aspect, a motor vehicle comprising such a device is disclosed.

The motor vehicle according to the invention is preferably configured as a passenger car or truck, or a passenger bus or motorcycle. In particular, the motor vehicle may comprise or make use of one or more of an internal combustion engine and an electric motor.

As a further aspect, the invention also comprises a computer-readable storage medium comprising program code which, when executed by a computer or a computer network, causes the computer or computer network to execute an embodiment of the method according to the invention. The storage medium may be provided at least in part as a non-volatile data storage (e.g., as a flash memory and/or as an SSD - solid state drive) and/or at least in part as a volatile data storage (e.g., as a RAM - random access memory). The storage medium may be arranged in the computer or computer network. However, the storage medium may also be operated, for example, as a so-called app store server and/or cloud server on the Internet. A processor circuit with, for example, at least one microprocessor may be provided by the computer or computer network. The program code may be provided as binary code and/or as assembly code and/or as source code of a programming language (e.g. C) and/or as program script (e.g. Python).

The invention also encompasses combinations of the features of the described embodiments. Thus, the invention also encompasses realizations each having a combination of the features of more than one of the described embodiments, provided that the embodiments have not been described as mutually exclusive.

With respect to the embodiments of the device, the vehicle and the storage medium, and the associated advantages, reference is made to the previously described embodiments of the method and the advantages thereof.

In the following, example embodiments of the invention are described with respect to the Figure. Therein,

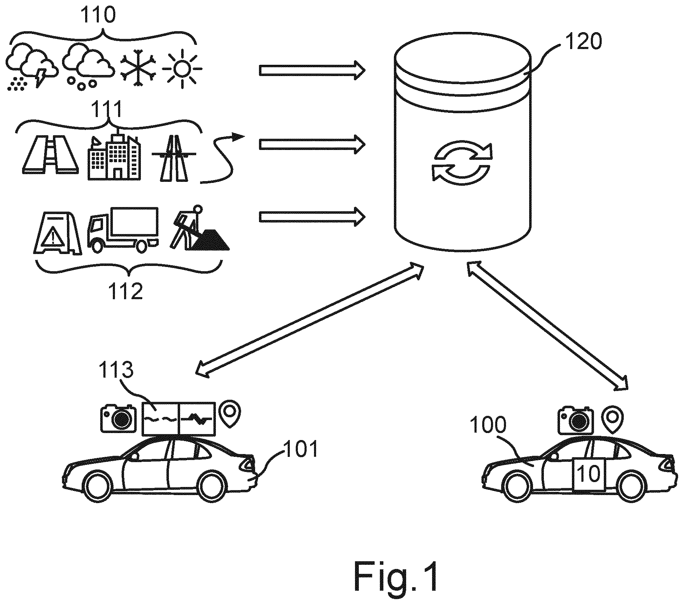

- Fig. 1: shows a schematic overview of an embodiment of a method and a device for adjusting a driving mode of a motor vehicle.

The example embodiments explained below are preferred embodiments of the invention. In the embodiments, the described components of the embodiments each represent individual features of the invention that are to be considered independently of one another, each of which also independently further the invention. Therefore, the disclosure is intended to include combinations of the features of the embodiments other than those shown. Furthermore, the described embodiments may also be supplemented by further of the already described features of the invention.

In the figures, identical reference numerals denote elements with identical functions.

Fig. 1 shows a schematic overview of an embodiment of a method and a device 10 for adjusting a driving mode of a motor vehicle 100.

The device 10 is comprised by the motor vehicle 100 and is adapted to perform the method steps as described in the following.

The device 10 is adapted to determine a position of the motor vehicle 100 using a position sensor.

The device 10 is also adapted to receive, from a remote computing unit 120, environment information based on the location of the motor vehicle 100.

Therein, the environment information originates from a vehicle 101 different from the motor vehicle 100 and comprises a road condition information 113, a road type information 111, a situational information 112 and/or weather information 110.

The device 10 is also adapted to adjust a driving mode of the motor vehicle 100 based on the environment information.

Therein, the environment information is younger than a predetermined age.

The environment information may originate from multiple vehicles (not shown), which are different from the motor vehicle 100

The device 10 is also adapted to determine a characteristic in the environment of the motor vehicle and to compare the characteristic with a characteristic in the environment information provided by the other vehicle 101.

Therein, adjusting a driving mode of the motor vehicle 100 may additionally be based on the comparison.

The device 10 is further adapted to receive a user input regarding a driving mode of the motor vehicle 100, wherein the user input comprises a user preference regarding a driving mode of the motor vehicle 100.

Therein, adjusting a driving mode of the motor vehicle based on the environment information may only performed in response to the user input.

The device 10 is further adapted to present a recommendation regarding a driving mode of the motor vehicle 100 based on the environment information.

Therein, the user input is received in response to the presentation of the recommendation.

In summary, the example embodiments show how an intelligent driving mode recommendation may be provided to a user of a motor vehicle.

## Claims

1. Method for adjusting a driving mode of a motor vehicle (100), comprising:
- determining a position of a motor vehicle (100);
- receiving, from a remote computing unit (120), environment information based on the location of the motor vehicle (100), wherein the environment information (110, 111, 112, 113) originates from a vehicle (101) different from the motor vehicle (100); and
- adjusting a driving mode of the motor vehicle (100) based on the environment information.

2. Method according to claim 1,
wherein the environment information comprises one or more of a road condition information (113), a road type information (111), a situational information (112) and/or weather information (110).

3. Method according to any one of the preceding claims,
wherein the environment information is younger than a predetermined age.

4. Method according to any one of the preceding claims,
wherein the environment information originates from multiple vehicles different from the motor vehicle (100).

5. Method according to any one of the preceding claims,
further comprising:
- determining a characteristic in the environment of the motor vehicle; and
- comparing the characteristic with a characteristic in the environment information;
wherein adjusting a driving mode of the motor vehicle (100) is additionally based on the comparison.

6. Method according to any one of the preceding claims,
further comprising:
- receiving a user input regarding a driving mode of the motor vehicle (100);
wherein adjusting a driving mode of the motor vehicle based on the environment information is performed in response to the user input.

7. Method according to claim 6,
wherein the user input comprises a user preference regarding a driving mode of the motor vehicle (100).

8. Method according to any one of claims 6 or 7,
further comprising:
- presenting a recommendation regarding a driving mode of the motor vehicle (100) based on the environment information;
wherein receiving a user input is received in response to the presentation of the recommendation.

9. Device (10) for adjusting a driving mode of a motor vehicle (100), wherein the device is adapted to perform a method of any one of the preceding claims.

10. Motor vehicle (100), comprising a device according to claim 9.
